(19) Europäisches Patentamt
European Patent Office
Office européen des brevets

(11) **EP 2 466 031 A1**

(12) **EUROPÄISCHE PATENTANMELDUNG**

(43) Veröffentlichungstag:
**20.06.2012   Patentblatt 2012/25**

(51) Int Cl.:
*E04D 5/14* (2006.01)      *E04B 1/66* (2006.01)
*B32B 27/08* (2006.01)    *B32B 27/30* (2006.01)
*C08G 18/08* (2006.01)    *C09J 175/04* (2006.01)
*C09J 175/06* (2006.01)

(21) Anmeldenummer: 10195805.6

(22) Anmeldetag: **17.12.2010**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Sika Technology AG**
**6340 Baar (CH)**

(72) Erfinder:
• **Demmig, Martin**
  **25451, Quickborn (DE)**

• **Buchholz, André**
  **27721, Ritterhude (DE)**
• **Bosse, Christina**
  **22765, Hamburg (DE)**
• **Linnenbrink, Martin**
  **21641 Apensen (DE)**

(74) Vertreter: **Sika Patent Attorneys**
**c/o Sika Technologies AG**
**Tüffenwies 16-22**
**8048 Zürich (CH)**

(54) **Verwendung von Dispersionsklebstoff-beschichteten Polyvinylchlorid-Abdichtungsfolien zum Abdichten**

(57)     Die vorliegende Erfindung betrifft ein Verfahren zum Abdichten eines Bauwerkes des Tiefbaus oder Hochbaus. Es beinhaltet insbesondere die Verwendung von nichtreaktiven Dispersionsklebstoffzusammensetzungen. Dieses Verfahren weist insbesondere die Vorteile auf, dass schnell eine gute und lang anhaltende Haftung erreicht werden kann und dass insbesondere die verwendeten nichtreaktiven Dispersionsklebstoffe eine geringe Tendenz aufweisen, den in der PVC-Abdichtungsfolie vorhandenen Weichemacher aufzunehmen, so dass das vorliegende Verfahren, bestens dazu geeignet ist, lang anhaltende Verklebungen von PVC Folien mit unterschiedlichsten Substraten zu gewährleisten.

Figur 4

EP 2 466 031 A1

**Beschreibung**

**Technisches Gebiet**

Die Erfindung betrifft das Gebiet der Abdichtungen von Bauwerken des Tiefbaus oder Hochbaus sowie das Gebiet der Dispersionsklebstoffe.

**Stand der Technik**

PVC-Abdichtungsfolien sind seit längerem bekannt. Sie werden auch seit langem für das Abdichten von Dächern und Dachstrukturen verwendet. Traditionell werden derartige Folien als Abdichtungsbahnen auf dem Dach verlegt und miteinander verschweisst. Für das Befestigen derartiger Bahnen kommen bisher primär mechanische Verankerungen, z. B. Nägel, zum Einsatz. Hierbei ist natürlich die Gewährleistung der Dichtheit ein grosses Problem.
PVC-Abdichtungsbahnen enthalten grosse Menge an Weichmacher um eine Flexibilität der Abdichtungsbahn auch langfristig zu gewährleisten.
Ein Verkleben von derartigen PVC-Abdichtungsbahnen mit dem Untergrund wurde in Praxis bisher jedoch nicht erfolgreich durchgeführt, da es sich gezeigt hat, dass der für eine solche Verklebung benötigte Klebstoff Weichmacher aus der PVC-Abdichtungsbahn aufnimmt, wodurch der Klebstoff in seiner Mechanik und anderen technischen Eigenschaften, insbesondere auch der Haftung, innert kurzer Zeit stark negativ beeinflusst wird, so dass der Haftverbund innert kürzester Zeit verloren geht.
Viele bekannte Klebstoffe sind weiterhin ungeeignet, da sie relativ lange brauchen, um einen Verbund zu ermöglichen, da sie beispielsweise eine Vernetzungsreaktion eingehen.
Für die Gewährleistung einer langfristigen Dachverklebung ist diese Veränderung nicht akzeptierbar.

**Darstellung der Erfindung**

Die Aufgabe der vorliegenden Erfindung ist es daher, ein Verfahren zur Verfügung zu stellen, welches es erlaubt, ein Bauwerkes des Tiefbaus oder Hochbaus verlässlich abzudichten und insbesondere hierfür einen Klebstoff zu verwenden, welcher eine geringe Weichmacheraufnahme zeigt.
Überraschenderweise wurde gefunden, dass ein Verfahren gemäss Anspruch 1 diese Aufgabe zu lösen vermag. Insbesondere erlaubt es dieses Verfahren auf einfache Art und Weise einen bisher lang gehegten Wunsch, nämlich eine vollflächige und langfristige Verklebung einer PVC-Bahn mit einem Substrat, insbesondere einem Dach oder einer Dachstruktur, zu realisieren und damit eine optimale Abdichtung zu erreichen. Es wurde überraschenderweise gefunden, dass nichtreaktive Dispersionsklebstoffe, insbesondere Polyesterpolyol basierende Polyurethandispersionsklebstoffe und Ethylen/Vinylacetat-Copolymer-Dispersionsklebstoffe, bestens für die Lösung dieses Problems geeignet sind. Als besonders vorteilhaft hat sich gezeigt, dass mit Dispersionsklebstoffzusammensetzungen beschichtete PVC Folien klebfrei sind und deshalb auch über längerer Zeit gelagert, insbesondere in Form von Rollen, werden können. Bei Bedarf lassen sie sich beim Kontaktieren mit dem abzudichtenden Substrat über das Zuführen von Wärme und anschliessendem Abkühlen mit dem Substrat verbinden, so dass ein Schichtverbundkörper gebildet werden kann. Es hat sich gezeigt, dass dieses Verfahren äusserst schnell zu einem Klebverbund führt, so dass nach einigen Minuten bereits hohe Kräfte zwischen PVC Folie und Substrat übertragen werden, welche im Test vielfach so hoch sind, dass sie zu Materialversagen im Substrat führen. Dieser schnelle Festigkeitsaufbau ist dahingehend vorteilhaft, dass für die Verklebung keine mechanischen Fixierungsmittel wie Klemmen oder dergleichen benötigt.
Die in diesem Dokument offenbarten Abdichtungsfolien lassen sich einfach produzieren, sind über längere Zeiträume lager- und transportfähig und lassen sich auf äusserst einfache Art und Weise verlegen und verkleben. Insbesondere werden für das Verlegen und Fixieren keinen mechanischen Befestigungsmittel, wie Nägel oder dergleichen, benötigt. Dies reduziert die Anfälligkeiten für Folien für Verletzungen. Demzufolge sind Quellen einer Undichtheit massiv vermindert.
Weitere Aspekte der Erfindung sind Gegenstand weiterer unabhängiger Ansprüche. Besonders bevorzugte Ausführungsformen der Erfindung sind Gegenstand der abhängigen Ansprüche.

**Wege zur Ausführung der Erfindung**

Die vorliegende Erfindung betrifft in einem ersten Aspekt ein Verfahren zum Abdichten eines Bauwerkes des Tiefbaus oder Hochbaus. Dieses Verfahren umfasst die Schritte

a) Auftragen einer nichtreaktiven Dispersionsklebstoffzusammensetzung auf eine flexible Polyvinylchlorid-Abdichtungsfolie;

b) Ablüften der nichtreaktiven Dispersionsklebstoffzusammensetzung unter Bildung einer mit abgelüftetem Dispersionsklebstoffzusammensetzung beschichteten Polyvinylchlorid-Abdichtungsfolie, welche bei Raumtemperatur klebfrei ist;

c) Auflegen der mit abgelüftetem Dispersionsklebstoffzusammensetzung beschichteten Polyvinylchlorid-Abdichtungsfolie, auf die Oberfläche eines Bauwerkes des Tiefbaus oder Hochbaus, so dass die abgelüftete Dispersionsklebstoffzusammensetzung zwischen Polyvinylchlorid-Abdichtungsfolie und Oberfläche angeordnet wird;

d) Zuführen von Wärme unter Aufschmelzen oder Anschmelzen der abgelüfteten Dispersionsklebstoffzusammensetzung

e) Abkühlen der abgelüfteten Dispersionsklebstoffzusammensetzung unter Bildung eines Klebverbundes zwischen flexibler Polyvinylchlorid-Abdichtungsfolie und der Oberfläche des Bauwerkes.

Als "Abdichtungsfolie" werden in diesem Dokument flexible, d.h. biegsame, flächige Kunststoffe insbesondere in einer Dicke von 0.05 Millimeter bis 5 Millimeter verstanden, die sich aufrollen lassen. Somit werden neben Folien im strengen Sinn von Dicken unter 1 mm, auch, und zwar vorzugsweise, Abdichtungsbahnen, wie sie typischerweise zum Abdichten von Tunnels, Dächern oder Schwimmbädern in einer Dicke von typischerweise 1 bis 3 mm, in Spezialfällen sogar in einer Dicke bis maximal 5 mm, verwendet werden, verstanden. Derartige Folien werden üblicherweise durch Streichen, Giessen, Kalandrieren oder Extrusion hergestellt und sind typischerweise in Rollen kommerziell erhältlich oder werden vor Ort hergestellt. Sie können einschichtig oder mehrschichtig aufgebaut sein. Es ist dem Fachmann klar, dass auch Folien noch andere Zusatzstoffe und Verarbeitungsmittel, wie Füllstoffe, UV- und Hitzestabilisatoren, Weichmacher, Gleitmittel, Biozide, Flammschutzmittel, Antioxidantien, Pigmente wie z.B. Titandioxid oder Russ, und Farbstoffe enthalten können. Das heisst, es werden in diesem Dokument auch derartige Folien als PVC-Folien bzw. Weich-PVC-Folien bezeichnet, welche nicht zu 100% aus PVC bzw. Weich-PVC, bzw. PET bestehen.

Als flexible Polyvinylchlorid-Abdichtungsfolie ist insbesondere eine für das Gebiet der Abdichtung von Gebäuden übliche PVC-Folie, insbesondere eine Weich-PVC-Folie, geeignet. Derartige PVC-Folien enthalten insbesondere Weichmacher, typischerweise Phthalat-Weichmacher.

Um als Abdichtungsfolie in der Praxis eingesetzt werden zu können, ist es wichtig, dass diese PVC-Folien flexible sind. Die Verwendung von starren PVC-Folien würde dazu führen, dass beim Biegen bzw. Umbiegen der Folie, wie sie beim Aufbringen der Folie aber auch im Gebrauch, beispielsweise durch Temperaturschwankungen, mechanische Belastungen, wie z.B. beim Begehen oder Befahren der Folie, erfolgen, brechen oder zumindest einreissen würden, wodurch die Abdichtfunktion nicht gewährleistet werden könnte. Zudem ist es in der Praxis fast unumgänglich, dass die Abdichtungsfolie in Rollenform auf die Baustelle geliefert werden muss. Ein starres PVC kann jedoch nicht gerollt werden.

Um die Mechanik der flexiblen Polyvinylchlorid-Abdichtungsfolie zu optimieren, ist es vorteilhaft, wenn die Abdichtungsfolie durch Fasern verstärkt ist. Es ist besonders vorteilhaft, wenn die PVC-Abdichtungsfolie durch Fasern verstärkt ist. Die Verstärkung durch Fasern kann in Form von losen Fasern oder -bevorzugt- durch flächige Faserngebilde, erfolgen. Vorzugsweise erfolgt die Verstärkung durch Fasern so, dass die PVC-Abdichtungsfolie mit einer Fasermatte, einem Fasergelege, einem Faservlies, einem Fasergittergelege oder einem Fasergewebe verstärkt ist. Als Fasern sind insbesondere Glas-, Kohlenstoff-, Zellulose-, Baumwoll- oder synthetische Kunststofffasern, bevorzugt Fasern aus Polyester oder aus einem Homo- oder Copolymeren von Ethylen und/oder Propylen oder aus Viskose geeignet. Je nach Ausgestaltungsform können die Fasern als Kurzfasern oder Langfasern, oder in Form von gesponnenen, gewobenen oder ungewobenen Faserwerkstoffen zum Einsatz kommen. Die Verwendung von Fasern ist insbesondere zur Verbesserung der mechanischen Verstärkung von Vorteil, insbesondere dann, wenn zumindest ein Teil der Fasern aus zugfesten oder hochzugfesten Fasern, insbesondere aus Glas oder Aramide, bestehen. Als Fasern sind meist bevorzugt Glasfasern oder Polyesterfasern.

Besonders geeignete PVC-Folien sind die von Sika Sarnafil AG, Schweiz, angebotenen Produkte Sikaplan®-12, Sikaplan®-15 G, Trocal® 12, Trocal® 15 SG sowie Produkte welche unter der Produktelinie Sarnafil® G41 0 und Sarnafil® S327 verkauft werden.

Als Bauwerk des Tiefbaus oder Hochbaus gelten insbesondere Gebäude, Häuser, Stützwände, Dächer, Tunnels, Brücken. Besonders bevorzugt als Bauwerk des Tiefbaus oder Hochbaus sind Dächer, insbesondere Flachdächer.

Als "nichtreaktive" Dispersionsklebstoffzusammensetzung gilt in diesem Dokument eine Dispersionsklebstoffzusammensetzung, welche keine Polymere aufweist, die chemisch miteinander oder mit Bestandteilen der Luft bei Raumtemperatur reagieren. Derartige nichtreaktive Dispersionsklebstoffzusammensetzung weisen insbesondere keine Isocyanat- oder Alkoxysilan- oder Epoxid- oder (Meth)acrylat-Gruppen aufweisende Polymere auf. Somit enthält die nichtreaktive Dispersionsklebstoffzusammensetzung insbesondere keine Epoxide, insbesondere keine Epoxidfestharze.

Als "Raumtemperatur" wird im vorliegenden Dokument eine Temperatur von 25°C verstanden.

Des Weiteren liegen nichtreaktive Dispersionsklebstoffzusammensetzungen als Dispersionen vor. Eine "Dispersion" stellt ein heterogenes Gemisch aus mindestens zwei Stoffen, die sich nicht oder kaum ineinander lösen oder chemisch miteinander verbinden, dar und weisen zwei Phasen auf. Im Rahmen dieser Erfindung werden als Dispersionen derartige heterogene Gemische eines Festkörpers (Suspension) oder einer Flüssigkeit (Emulsion) in einer anderen Flüssigkeit verstanden.

Die flüssige Phase der Dispersion ist vorzugsweise ein Lösungsmittel, insbesondere ein organisches Lösungsmittel mit einem Siedepunkt bei Normdruck von tiefer als 120°C, bevorzugt tiefer als 90°C, oder Wasser.

Bevorzugt ist die flüssige Phase Wasser. Deshalb ist die nichtreaktive Dispersionsklebstoffzusammensetzung bevorzugt eine wässrige Dispersion. Bevorzugt weist die Dispersionsklebstoffzusammensetzung eine Flüssigphase und eine Festkörperphase auf.

Da die Zusammensetzung als Dispersion vorliegt, versteht es von selbst, dass in diesem Zusammenhang ein derartiges Lösungsmittel nicht in der Lage ist den Festkörper der Festkörperphase oder die zweite Flüssigkeit vollständig zu lösen. Meist bevorzugt stellt die Flüssigphase Wasser dar.

Als besonders gut geeignet haben sich einerseits nichtreaktive Dispersionsklebstoffzusammensetzungen auf Polyesterpolyol basierenden Polyurethandispersionen sowie andererseits Dispersionen, welche Copolymere aus der radikalischen Polymerisation von mindestens zwei unterschiedlichen Monomeren, welche mindestens eine, bevorzugt eine ungesättigte C=C-Doppelbindung, erhalten werden, enthalten, erhalten werden, gezeigt.

Polyesterpolyol basierende Polyurethane werden vorzugsweise aus der Umsetzung von Polyisocyanaten und vorzugsweise bei Raumtemperatur festen Polyesterpolyolen hergestellt. Polyesterpolyole ihrerseits werden durch Polykondensation von Hydroxycarbonsäuren oder der Polykondensation von aliphatischen und/oder aromatischen Polycarbonsäuren mit zwei- oder mehrwertigen Alkoholen, vorzugsweise aus kurzkettigen Polyolen, vorzugsweise Diolen oder Triolen mit einem Molekulargewicht von weniger als 250 g/mol, insbesondere von weniger als 150 g/mol, oder Polyetherpolyolen und Dicarbonsäuren oder Dicarbonsäureanhydriden hergestellt in einer derart geeigneten Stöchiometrie, dass die Umsetzungsprodukte Hydroxylgruppen aufweisen, und somit Polyesterpolyole darstellen. Besonders bevorzugt als Polyesterpolyole sind Kondesationsprodukte aus Ethylenglykol, Diethylenglykol, Propylenglykol, Dipropylenglykol, Neopentylglykol, 1,4-Butandiol, 1,5-Pentandiol, 3-Methyl-1,5-hexandiol, 1,6-Hexandiol, 1,8-Octandiol, 1,10-Decandiol, 1,12-Dodecandiol, Glycerin, 1,1,1-Trimethylolpropan mit organischen Di- oder Tricarbonsäuren, insbesondere Dicarbonsäuren, oder deren Anhydride oder Ester, wie beispielsweise Bernsteinsäure, Glutarsäure, Adipinsäure, Trimethyladipinsäure, Korksäure, Azelainsäure, Sebacinsäure, Maleinsäure, Fumarsäure, Phthalsäure, Phthalsäureanhydrid, Isophthalsäure, Terephthalsäure, Trimellithsäure und Trimellithsäureanhydrid.

Besonders geeignete Monomere für die Herstellung von Copolymere sind ausgewählt aus der Gruppe bestehend aus (Meth)acrylsäure, (Meth)acrylsäureester, (Meth)acrylsäureamide, Ethylen, Propylen, Butylen, Isobutylen, Butadien, Isopren, Styrol, Acrylonitril, Vinylester und Allylether. Derartige Copolymer werden insbesondere durch radikalische Emulsions- oder Lösungsmittelpolymerisation hergestellt. Aufgrund des Reaktionsmechanismus erfolgt die Polymerisation über die Doppelbindungen. Deshalb weisen die Copolymere auch keine (Meth)acrylsäure-, (Meth)acrylsäureester- oder (Meth)acrylsäureamid-Gruppen mehr auf.

Als besonders bevorzugt als derartige Copolymere gelten Ethylen/Vinylacetat-Copolymere.

Vorzugsweise ist oder enthält die nichtreaktive Dispersionsklebstoffzusammensetzung eine Polyurethandispersion, insbesondere auf einem Polyesterpolyol basierende Polyurethandispersion.

Als besonders geeignet hat sich gezeigt, dass die nichtreaktive Dispersionsklebstoffzusammensetzung eine Polyurethandispersion, insbesondere auf einem Polyesterpolyol basierende Polyurethandispersion, sowie mindestens ein Copolymer, erhalten aus der radikalischen Polymerisation von mindestens zwei Monomeren mit mindestens einer, bevorzugt einer, ungesättigten C=C-Doppelbindung, bevorzugt ein Ethylen/Vinylacetat-Copolymer, enthält, wobei das Gewichtverhältnis zwischen Polyurethandispersion und Copolymer aus mindestens zwei Monomeren mit einer ungesättigten C=C-Doppelbindung einen Wert von 100 : 30 - 30 : 70, insbesondere von 50 : 50, beträgt.

Der Anteil an Polyesterpolyol basierende Polyurethan und Copolymer, erhalten aus der radikalischen Polymerisation von mindestens zwei Monomeren mit mindestens einer, bevorzugt einer, ungesättigten C=C-Doppelbindung am Gewicht der gesamten nichtreaktive Dispersionsklebstoffzusammensetzung vorzugsweise zwischen 30 und 70 Gew.-%, insbesondere zwischen 50 und 40 Gew.-%.

Bevorzugt weist die nichtreaktive Dispersionsklebstoffzusammensetzung eine Flüssigphase und eine Festkörperphase auf.

Die Festkörperphase umfasst insbesondere ein bei Raumtemperatur festes Polymer.

Es ist weiterhin bevorzugt, dass der Festkörper der nichtreaktiven Dispersionsklebstoffzusammensetzung eine Schmelztemperatur von 60 - 120 °C, insbesondere von 70 - 90 °C, aufweist.

Als bei Raumtemperatur feste Polymere sind insbesondere die bereits erwähnten und bevorzugten Polyesterpolyol basierenden Polyurethane und Copolymere, welche aus der radikalischen Polymerisation von mindestens zwei Monomeren mit mindestens einer, vorzugsweise einer, ungesättigten C=C-Doppelbindung erhalten werden.

Die nichtreaktive Dispersionsklebstoffzusammensetzung ist vorzugsweise eine wässrige Dispersion.

Bei eine derartigen wässrigen Dispersion beträgt der Wasseranteil am Gewicht der gesamten nichtreaktiven Dispersionsklebstoffzusammensetzung vorzugsweise zwischen 30 und 70 Gew.-%, insbesondere zwischen 40 und 60 Gew.-%.

Die feste bzw. zweite flüssige Phase und die flüssige Phase werden auf bei der Herstellung übliche Art und Weise hergestellt. Insbesondere bevorzugt wird eine Insitu-Herstellung bevorzugt, d.h. es werden Vorstufen, welche zur der Festkörper- bzw. zweiten Flüssigphase führen in die Flüssigphase, unter intensivem Rühren zugegeben und miteinander reagiert. Eine sehr geeignete Methode hierfür ist die Emulsionspolymerisation von mindestens zwei Monomeren mit einer ungesättigten C=C-Doppelbindung in der Flüssigphase, welche direkt zu einer erwünschten Dispersion führen kann.

Es ist zuweilen auch vorteilhaft zwei oder mehrere bereits als Dispersionen vorliegende Dispersionen miteinander zu mischen.

Die Herstellung von derartigen nichtreaktiven Dispersionsklebstoffzusammensetzungen erfolgt in dem Fachmann bekannter Art und Weise. Um möglichst gute Dispersionen zu erhalten, wird bevorzugt, dass bei der Herstellung hochtourige Mischer, insbesondere Rotor-Stator-Dispergatoren, benutzt werden.

In Schritt a) des Verfahrens wird die nichtreaktive Dispersionsklebstoffzusammensetzung 2 auf eine flexible Polyvinylchlorid-Abdichtungsfolie 1 aufgetragen. Das Auftragen der nichtreaktive Dispersionsklebstoffzusammensetzung auf die Polyvinylchlorid-Abdichtungsfolie kann insbesondere durch Aufrakeln, Besprühen, Bestreichen, Aufstempeln, Aufwalzen, Aufgiessen, Aufpinseln, Aufrollen oder Eintauchen erfolgen.

Das Auftragen der nichtreaktiven Dispersionsklebstoffzusammensetzung kann vollflächig, rastermässig oder mit einem speziellen Muster erfolgen.

Anschliessend wird in Schritt b) die nichtreaktive Dispersionsklebstoffzusammensetzung 2 abgelüftet. Es wird hierbei eine mit abgelüfteter Dispersionsklebstoffzusammensetzung 3 beschichteten Polyvinylchlorid-Abdichtungsfolie 4, gebildet, welche bei Raumtemperatur klebfrei ist.

Das Ablüften bewirkt, dass das Lösungsmittel bzw. das Wasser sich verflüchtigt. Die sogenannte Ablüftezeit, d.h. diejenige Zeit, welche ab Auftrag der nichtreaktive Dispersionsklebstoffzusammensetzung verstreicht, bis die Zusammensetzung trocken, d.h. klebfrei, ist beträgt vorzugsweise 10 bis 240 Minuten, insbesondere 30 bis 90 Minuten.

Das Ablüften kann durch ein Ablüftemittel beschleunigt werden. Als Ablüftemittel kann beispielsweise ein Gebläse, insbesondere ein Luftgebläse, vorzugsweise mit erwärmter Luft, oder eine IR-Strahlungsquelle dienen. Das Ablüften kann bei Raumtemperatur oder bei leicht erhöhter Temperatur erfolgen, insbesondere bei einer Temperatur unter 60°C.

Die Menge der in Schritt a) aufgetragenen Menge an nichtreaktivem Dispersionsklebstoffzusammensetzung ist vorzugsweise so bemessen, dass die Schichtdicke der nach Schritt b) abgelüfteten Dispersionsklebstoffzusammensetzung 3 zwischen 50 und 500 Mikrometer, insbesondere zwischen 100 und 250 Mikrometer, beträgt.

Die derart hergestellte mit Dispersionsklebstoffzusammensetzung beschichtete abgelüftete Polyvinylchlorid-Abdichtungsfolie kann nun je nach Bedarf abgelängt, abgeschnitten, aufgerollt oder direkt weiter verarbeitet werden. Die Rollen mit den beschichteten Kunststoff-Folien können nun je nach Bedarf gelagert oder transportiert werden.

Die Schritte a) und b) erfolgen vorzugsweise in einem industriellen Prozess in einem Folienwerk und die beschichtete Polyvinylchlorid-Abdichtungsfolie gelangt auf der Baustelle vorzugsweise in Form von beschichtete Polyvinylchlorid-Abdichtungsfolie ab einer Rolle zum Einsatz. Die ist dahingehend vorteilhaft, als dass das Ablüften nicht auf der Baustelle erfolgen muss, was - falls die Dispersionsklebstoffzusammensetzung Lösungsmittel-basierend ist - arbeitshygienisch, sicherheitstechnisch und ökotoxikologisch vorteilhaft ist, weil die verdunstenden Lösungsmittel in einem Folienwerk einfacher und effizient abgefangen werden können und damit verhindert wird, dass die Lösungsmittel in die Umwelt gelangen bzw. sich entzünden können. Zudem muss auf der Baustellen nicht gewartet werden, bis die Dispersionszusammensetzung abgelüftet ist und erlaubt somit ein stark beschleunigtes Arbeiten auf der Baustelle. Aufgrund der Eigenschaft, dass die abgelüftete Dispersionsklebstoffzusammensetzung klebfrei ist, lässt sich die beschichtete Folie einfach aufrollen und so als Rolle platzsparend lagern und transportieren und bei Bedarf wieder abrollen. Vorzugsweise verkleben einzelne Schichten auf der Rolle nicht miteinander, d.h. vorzugsweise entsteht bei der, vor allem langen, Lagerung kein Blocken der Rolle. In gewissen -nicht bevorzugten- Fällen kann es jedoch angezeigt sein, das Blocken durch ein Auflegen eines Trennpapieres, insbesondere eines silikoniserten Trennpapieres, auf die beschichtete Folie vor dem Rollen, vollständig zu verhindern.

In einem dem Schritt b) nachgelagerten Schritt c) wird die Dispersionsklebstoff-beschichteten Polyvinylchlorid-Abdichtungsfolie 4, auf die Oberfläche 5 eines Bauwerkes 6 des Tiefbaus oder Hochbaus aufgelegt. Das Auflegen der beschichteten Folie erfolgt derart, dass die abgelüftete Dispersionsklebstoffzusammensetzung 3 zwischen Polyvinylchlorid-Abdichtungsfolie 1 und Oberfläche 5 angeordnet wird.

Die Folie ist auf der Oberfläche aufgrund der Klebfreiheit der abgelüftete Dispersionsklebstoffzusammensetzung verschiebbar. Aufgrund des Eigengewichtes der mit Klebstoff beschichten PVC-Folie wird jedoch für dieses Verschieben einer gewisse Mindestkraft benötigt. Dies ist deshalb von Vorteil, weil dadurch ein nicht gewolltes Verschieben verhindert werden kann. Somit wird zum Beispiel bei abschüssigen Oberflächen ein nichtgewolltes Abrutschen oder ein Wegwehen durch geringe Winde weitgehend verhindert. Die für ein Verschieben notwendige Mindestkraft kann einerseits mit der Wahl der Zusatzstoffe (z.B. Füllstoffe) oder der Foliendicke eingestellt werden oder andererseits kann die Oberflächenstruktur der abgelüfteten Dispersionsklebstoffzusammensetzung die Haftreibung massgebend beeinflusst werden. So lässt sich beispielsweise die Haftreibung vergrössern durch eine raue Klebstoffoberfläche, welch zum Beispiel das Resultat eines ungleichmässigen Klebstoffauftrages oder eines rastermässigen Klebstoffauftrages ist.

Die Oberfläche des Bauwerks kann aus verschiedenen Materialien bestehen. Insbesondere sind die derartige Oberflächenmaterialien Baumaterialien, wie Beton, Gips, Stein, Backstein, Mörtel, Faserzemente und Natursteine wie Granit oder Marmor; Metalle oder Legierungen wie Aluminium, Stahl, Buntmetalle, verzinkte Metalle; Holz, Isolationsschäume, Polyisocyanuratharze (PIR); beschichtete Substrate wie beschichtete Metalle oder Legierungen; sowie Farben und Lacke. Insbesondere bevorzugt sind Materialien, wie sie als Dachuntergrund zum Einsatz kommen.

Die Substrate können bei Bedarf vor dem Applizieren des Klebstoffes oder Dichtstoffes vorbehandelt werden. Derartige Vorbehandlungen umfassen insbesondere physikalische und/oder chemische Reinigungsverfahren, beispielsweise Schleifen, Sandstrahlen, Bürsten oder dergleichen, oder Behandeln mit Reinigern oder Lösemitteln oder das Aufbringen eines Haftvermittlers, einer Haftvermittlerlösung oder eines Primers.

In einer Ausführungsform der Erfindung wird die im beschriebenen Verfahren ist die Oberfläche 5 eines Bauwerkes 6 des Tiefbaus oder Hochbaus eine mit abgelüfteten Dispersionsklebstoffzusammensetzung 3 beschichteten Oberfläche 5', wie sie über die zusätzlichen Schritte a') und b') erhalten wurde:

> a') Auftragen einer nichtreaktiven Dispersionsklebstoffzusammensetzung 2 auf Oberfläche 5 eines Bauwerkes 6 des Tiefbaus oder Hochbaus;
> b') Ablüften der nichtreaktiven Dispersionsklebstoffzusammensetzung (2) unter Bildung einer mit abgelüfteter Dispersionsklebstoffzusammensetzung 3 beschichteten Oberfläche 5'.

Es gilt hierbei jedoch die Massgabe, dass die Schritte a') und b') zeitlich vor dem Schritt c) erfolgen.

In einem weiteren Schritt d) wird Wärme zugeführt, so dass die abgelüfteten Dispersionsklebstoffzusammensetzung 3 an- oder aufschmilzt.

Das Zuführen der Wärme kann vorzugsweise in Schritt d) während des Auflegens der Dispersionsklebstoff-beschichteten Polyvinylchlorid-Abdichtungsfolie 4 in Schritt c), insbesondere in den während des Auflegens zwischen Dispersionsklebstoff-beschichteter Polyvinylchlorid-Abdichtungsfolie 4 und der Oberfläche 5 eines Bauwerkes 6 gebildeten Spalt 7, erfolgen.

In einer weiteren Ausführungsform erfolgt das das Zuführen von Wärme in Schritt d) auf der der Dispersionsklebstoffzusammensetzung entgegen gesetzten Seite der Polyvinylchlorid-Abdichtungsfolie 4 und wird über die Polyvinylchlorid-Abdichtungsfolie 4 (hindurch) auf die Dispersionsklebstoffzusammensetzung übertragen.

Das Zuführen von Wärme kann durch Heissluft, Flamme, Induktion oder dielektrischer Erwärmung erfolgen. Das Zuführen der Wärme erfolgt vorzugsweise derart, dass die Wärme die Folie, der Klebstoff oder das Material der Oberfläche des Bauwerks thermisch nicht zu stark negativ belastet oder gar zerstört.

Dadurch dass die Dispersionsklebstoffzusammensetzung auf- oder anschmilzt, wird die abgelüftete Dispersionsklebstoffzusammensetzung zumindest teilweise fliessfähig, wodurch ein inniger Kontakt zur Oberfläche des Bauwerks gewährleistet wird.

Die Erwärmung des Klebstoffs erfolgt dabei insbesondere auf eine Klebstofftemperatur von 60 bis 120°C.

In einem dem Schritt d) nachgelagerten Schritt e) wird die abgelüfteten Dispersionsklebstoffzusammensetzung 3 unter Bildung eines Klebverbundes zwischen flexibler Polyvinylchlorid-Abdichtungsfolie 1 und der Oberfläche des Bauwerkes 6 abgekühlt. Dieses Abkühlen erfolgt typischerweise ohne weitere Hilfsmittel. In gewissen Fällen, kann es jedoch angebracht und von Vorteil sein, wenn zum Beispiel die Folie nach kurzer Zeit bereits belastet oder begangen werden soll, das Abkühlen zu beschleunigen. Dies kann beispielsweise erfolgen, indem durch ein Abkühlmittel, beispielsweise durch ein Gebläse, insbesondere ein Luftgebläse, die Folie oder das Bauwerk gekühlt wird.

Durch dieses beschriebene Verfahren wird das Bauwerk des Tiefbaus oder Hochbaus abgedichtet. Diese Abdichtung ist insbesondere eine Abdichtung gegen Wasser, insbesondere gegen Regenwasser oder Bauwasser. Es lassen sich mit diesem Verfahren Bauwerke über längere Zeiträume, typischerweise mehrere Jahre, insbesondere mehr als 10 oder 20 Jahre, verlässlich abdichten.

Somit stellt die Verwendung einer mit einer nicht-reaktiven abgelüfteten Dispersionsklebstoff-beschichteten Polyvinylchlorid-Abdichtungsfolie 3, welche bei Raumtemperatur klebfrei ist; zum Abdichten eines Bauwerkes des Tiefbaus oder Hochbaus ein weiterer Aspekt der vorliegenden Erfindung dar.

Schliesslich stellt ein Schichtverbundkörper 9 einen weiteren Aspekt der vorliegenden Erfindung dar. Dieser Schichtverbundkörper 9 weist eine

> i) Schicht einer Polyvinylchlorid-Abdichtungsfolie 1
> ii) Schicht einer abgelüfteten Dispersionsklebstoffzusammensetzung 3
> iii) ein Bauwerk des Tiefbaus oder Hochbaus 6

auf. Die Schicht der abgelüfteten Dispersionsklebstoffzusammensetzung 3 ist hierbei zwischen der Schicht der Polyvinyl-Abdichtungsfolie 1 und des Bauwerks des Tiefbaus oder Hochbaus 6 angeordnet.

Insbesondere ist hierbei das Bauwerk 6 des Tiefbaus oder Hochbaus ein Dach.

**Kurze Beschreibung der Zeichnungen**

Im Folgenden wird die Erfindung anhand von bevorzugten Ausführungsbeispielen mit Hilfe der Figuren näher beschrieben, wobei darauf hingewiesen wird, dass nur die für das unmittelbare Verständnis der Erfindung wesentlichen Elemente gezeigt sind. Gleiche Elemente sind in den verschiedenen Figuren mit gleichen Bezugszeichen gekennzeichnet. Weiterhin wird darauf hingewiesen, dass es sich bei den hier gezeigten Figuren um schematische Darstellungen ohne Grössenbezüge handelt.

Es zeigen:

Fig. 1    einen schematischen Querschnitt durch eine flexible Polyvinylchlorid Abdichtungsfolie, bzw.-Abdichtungsbahn, auf welcher eine nichtreaktive Dispersionsklebstoffzusammensetzung aufgebracht ist;

Fig. 2    einen schematischen Querschnitt durch eine mit abgelüfteter Dispersionsklebstoffzusammensetzung beschichtete Polyvinylchlorid-Abdichtungsfolie, bzw.-Abdichtungsbahn;

Fig.3    einen schematischen Querschnitt durch eine zu einer Rolle aufgerollten mit abgelüfteter Dispersionsklebstoffzusammensetzung beschichtete Polyvinylchlorid-Abdichtungsfolie;

Fig.4    einen schematischen Querschnitt durch einen Schichtverbundkörper bei seiner Herstellung in einer ersten Ausführungsform;

Fig.5    einen schematischen Querschnitt durch einen Schichtverbundkörper bei seiner Herstellung in einer zweiten Ausführungsform;

Fig.6    einen schematischen Querschnitt durch einen Schichtverbundkörper bei seiner Herstellung in einer dritten Ausführungsform.

Die folgenden Figuren zeigen schematisch einzelne Stufen eines Verfahrens zum Abdichten eines Bauwerkes des Tiefbaus oder Hochbaus:

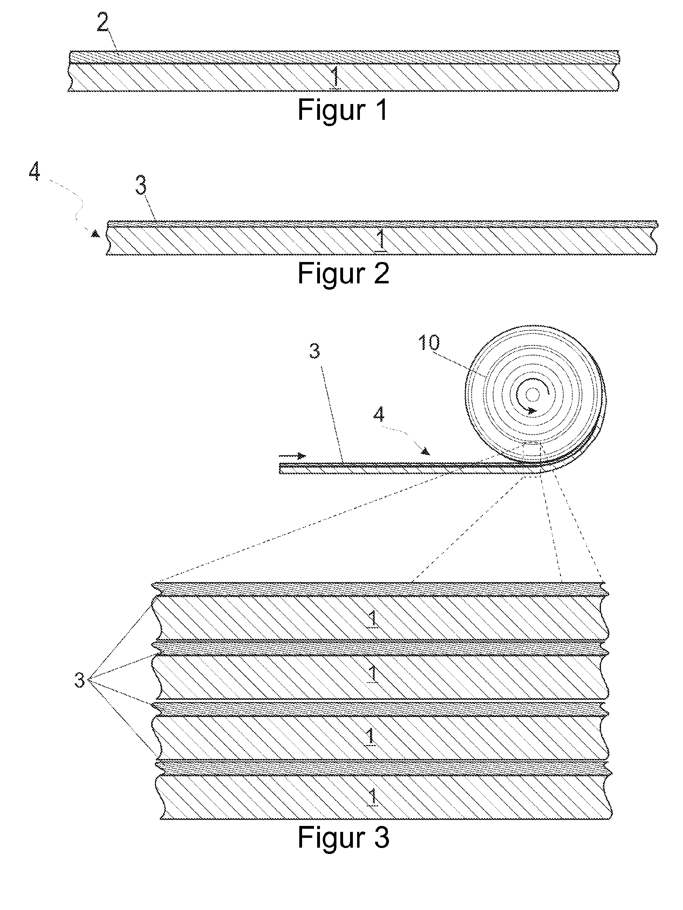

Figur 1 zeigt eine flexible Polyvinylchlorid-Abdichtungsfolie 1, auf welche in einem Schritt a) eine nichtreaktive Dispersionsklebstoffzusammensetzung 2 als Schicht aufgetragen wurde. Der Auftrag erfolgte beispielsweise durch ein Aufrakeln.

Figur 2 zeigt die Abdichtungsfolie von Figur 1 nachdem im Schritt b) die nichtreaktive Dispersionsklebstoffzusammensetzung 2 abgelüftet ist. Das Ablüften dauert hierbei typischerweise 30 bis 90 Minuten. Durch das Ablüften entsteht eine mit abgelüfteter Dispersionsklebstoffzusammensetzung 3 beschichtete Polyvinylchlorid-Abdichtungsfolie 4, welche bei Raumtemperatur klebfrei ist. Durch die Klebfreiheit bedingt, ist die der Klebstoff, bzw. die Folie, problemlos rollbar, wie in Fig. 3 beschrieben wird. Ausserdem ist die Folie frei verschiebbar und verklebt nicht ungewollt mit einem Untergrund und ist sehr vorteilhaft darin, dass Staub oder andere kleine Partikel nicht auf der Oberfläche kleben bleiben und die Folienoberfläche so mit verschmutzen bzw. optisch nachteilig beeinflussen würden.

Figur 3 zeigt, dass die mit abgelüfteter Dispersionsklebstoffzusammensetzung 3 beschichtete Polyvinylchlorid-Abdichtungsfolie 4, bzw. -Abdichtungsbahn 4, zu einer Rolle 10 aufgerollt werden können. In der hier gezeigten Ausführungsform erfolgt das Rollen ohne die Verwendung von eines silikoniserten Trennpapieren, welche beim Aufrollen auf den abgelüfteten Klebstoff aufgelegt würden und dann das Verkleben von einzelnen Lagen in der Rolle verhindern würden. Wie in der als Vergrösserung im unteren Teil der Figur 3 dargestellt, ist dies jedoch bei der dargestellten Ausführungsform nicht nötig. Hier liegen die einzelnen Lagen in direktem Kontakt miteinander. Aufgrund der Klebfreiheit des abgelüfteten Klebstoffs blockt eine derartige Rolle nicht. Die Rolle 10 kann platzsparend über längere Zeitabschnitte gelagert und transportiert werden, bei Bedarf im Folienwerk oder auf der Baustelle abgerollt und allenfalls in die gewünschte Bahnlänge abgelängt werden.

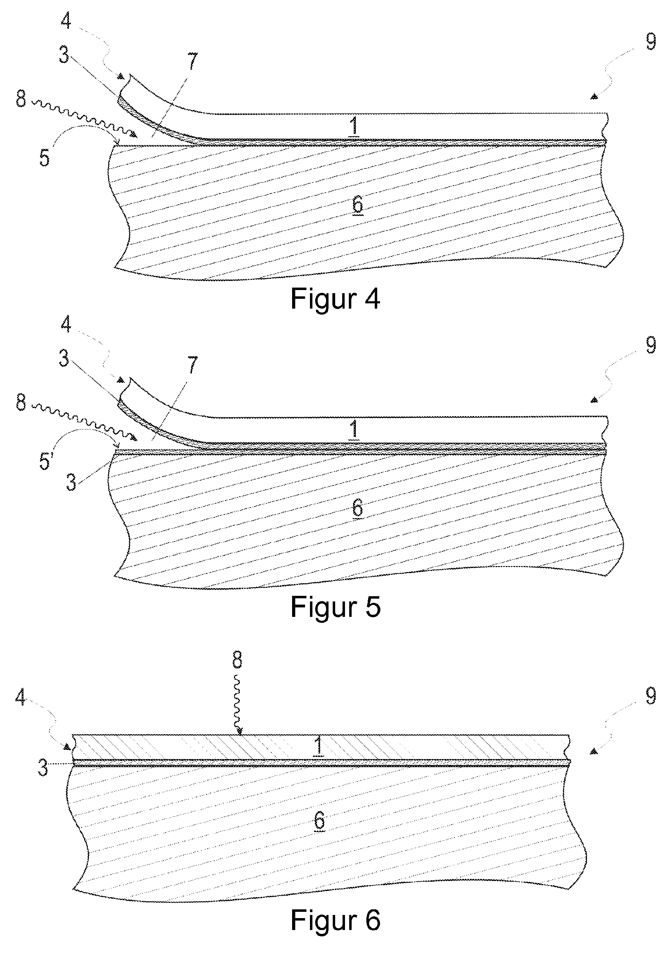

Die Figuren 4 und 5 zeigen die Schritte c) und d) des Verfahrens.

In Figur 4 ist eine erste Ausführungsform dargestellt. Hier wird im Schritt c) die mit abgelüftete Dispersionsklebstoffzusammensetzung 3 beschichteten Polyvinylchlorid-Abdichtungsfolie 4 auf die Oberfläche 5 eines Bauwerkes 6 des Tiefbaus oder Hochbaus aufgelegt. Aufgrund der Klebfreiheit der Folie kann diese sich auf der Oberfläche 5 bewegt werden, wodurch beispielsweise eine Endpositionierung der Folie ermöglicht wird. Durch das Gewicht der Folie bedingt, ist jedoch eine gewisse Trägheit der Folie vorhanden und verhindert insbesondere weitgehend das ungewollte Verschieben, zum Beispiel durch Abrutschen oder Windeinfluss. Weiterhin zeigt Figur 4 eine Variante des Schrittes d). Hier erfolgt das Zuführen von Wärme in Schritt d) während des Auflegens der Dispersionsklebstoff-beschichteten Polyvinylchlorid-Abdichtungsfolie 4 in Schritt c) in den während des Auflegens zwischen Dispersionsklebstoff-beschichteter Polyvinylchlorid-Abdichtungsfolie 4 und der Oberfläche 5 eines Bauwerkes 6 gebildeten Spalt 7. Durch die Wärme bedingt erfolgt ein Aufschmelzen oder Anschmelzen der abgelüfteten Dispersionsklebstoffzusammensetzung 3. Dadurch wird die Dispersionsklebstoffzusammensetzung zumindest teilweise fliessend und kann sich die Oberfläche 5 des Bauwerks kontaktieren. Im anschliessenden Schritt e) wird die abgelüftete Dispersionsklebstoffzusammensetzung 3 wieder abgekühlt, wodurch ein Klebverbund zwischen flexibler Polyvinylchlorid-Abdichtungsfolie 1 und der Oberfläche des Bauwerkes 6 erfolgt und sich als Resultat ein Schichtverbundkörper 9 bildet. Dieser Schichtverbundkörper 9 weist eine Schicht einer Polyvinylchlorid-Abdichtungsfolie 1, eine Schicht einer abgelüfteten Dispersionsklebstoffzusammensetzung 3 sowie ein Bauwerk des Tiefbaus oder Hochbaus 6, auf. Die Schicht der abgelüfteten Dispersionsklebstoffzusammensetzung 3 ist hierbei zwischen der Schicht der Polyvinyl-Abdichtungsfolie 1 und des Bauwerks des Tiefbaus oder Hochbaus 6 angeordnet.

Figur 5 stellt eine zweite Ausführungsform dar. Diese entspricht im Wesentliche der Figur 4, ausser das die Oberfläche 5 des Bauwerks eine mit abgelüfteten Dispersionsklebstoffzusammensetzung 3 beschichteten Oberfläche 5' darstellt. Eine derartige Oberfläche 5' wird vor dem Auflegen über die zusätzlichen Schritte a') und b') erhalten. Im Schritt a') wurde eine nichtreaktive Dispersionsklebstoffzusammensetzung 2 auf Oberfläche 5 eines Bauwerkes 6 des Tiefbaus oder Hochbaus aufgetragen und anschliessend wurde die nichtreaktive Dispersionsklebstoffzusammensetzung 2 unter Bildung einer mit abgelüfteter Dispersionsklebstoffzusammensetzung 3 beschichteten Oberfläche 5' abgelüftet. Anschliessend wurde Schritt c) durchgeführt.

Figur 6 stellt eine dritte Ausführungsform dar. Hierbei wird die Wärme mittels einer Wärmequelle 8 in Schritt d) auf der der Dispersionsklebstoffzusammensetzung entgegen gesetzten Seite der Polyvinylchlorid-Abdichtungsfolie 4 zugeführt und wird über die Polyvinylchlorid-Abdichtungsfolie (4) auf die Dispersionsklebstoffzusammensetzung übertragen. Durch die Wärme bedingt erfolgt ein Aufschmelzen oder Anschmelzen der abgelüfteten Dispersionsklebstoffzusammensetzung 3. Dadurch wird die Dispersionsklebstoffzusammensetzung zumindest teilweise fliessend und kann sich die Oberfläche 5 des Bauwerks kontaktieren. Im anschliessenden Schritt e) wird die abgelüftete Dispersionsklebstoffzusammensetzung 3 wieder abgekühlt, wodurch ein Klebverbund zwischen flexibler Polyvinylchlorid-Abdichtungsfolie 1 und der Oberfläche des Bauwerkes 6 erfolgt und sich als Resultat, wie in Figur 5 beschrieben, einen Schichtverbundkörper 9 bildet.

**Beispiele**

Im Folgenden wird die Erfindung auch noch anhand von Beispielen illustriert.

Es wurden die in Tabelle 1 angegebenen Klebstoffzusammensetzungen hergestellt. Der Vergleichsklebstoff **Ref.1** ist Sarnacol 2170, Sika Sarnafil AG, Schweiz, welcher einen kommerziellen Lösungsmittel-basierenden Kontaktklebstoff auf Basis eines Synthesekautschuks darstellt. Weiterhin wurde mit **Ref. 2** ein Klebstoffhergestellt, welcher eine Lösung eines thermoplastischen Polyurethanes in einem Lösungsmittel darstellt. In den erfindungsgemässen Dispersionsklebstoffen **1** bis **5** wurden die folgenden EVA-Dispersion und/oder Polyesterdispersion verwendet:

**EVA-Disp.1** :  wässrige EVA-Dispersion. Wasseranteil:48 Gew.-%. EVA-Anteil: 52 Gew.-%, Glasübergangstemperatur: 6°C, Partikelgrösse: 1 μm.

**Polyester-Disp.1**:  anionische wässrige Polyurethandispersion basierend auf Polyesterpolyol. Polyurethananteil: 40 Gew.-%, Wasser-anteil: 60 Gew.%., Viskosität 150 m•Pas (DIN 53018)

Tabelle 1: Zusammensetzungen und Ergebnisse.

| | *Ref.1* | *Ref2* | *1* | *2* | *3* | *4* | *5* |
|---|---|---|---|---|---|---|---|
| Methylethylketon [%] | | 80 | | | | | |
| Desmocoll 526 [%] | | 20 | | | | | |
| *EVA-Disp.1* [%] | | | 50 | 50 | 30 | 70 | |
| *Polyester-Disp.1* [%] | | | 50 | 50 | 70 | 30 | 100 |
| | | | | | | | |
| Klebstoff Applikation | PVC PIR | PVC PIR | PVC PIR | -PIR | PVC PIR | PVC PIR | PVC PIR |
| Schälwert nach 5 min. | 0 | MB | MB | MB | MB | MB | MB |

(fortgesetzt)

| | Ref.1 | Ref2 | 1 | 2 | 3 | 4 | 5 |
|---|---|---|---|---|---|---|---|
| Schälwert nach 3d | MB | MB | MB | MB | MB | MB | MB |
| Weichmacheraufnahme [%] | 60 | 23 | 12 | 12 | 6.3 | 10 | 13 |

Die Klebstoffe wurden auf Sarnafil® G410-12 EL, eine kommerziell bei Sika Sarnafil AG, Schweiz, erhältliche PVC-Abdichtungsfolie (Dicke 1.5 mm, mit Glasvlies verstärkt), einseitig in einer Menge von 200 g/m$^2$ mittels Rakel aufgetragen. Bei allen Beispielen mit der Ausnahme von Beispiel 2, wurde der jeweilige Klebstoff auf eine Wärmedämmplatte aus Polyisocyanuratharz (PIR) in einer Menge von 200 g/m$^2$ mittels Rakel aufgetragen. Die Klebstoffe wurden während 15 Minuten abgelüftet. Die so beschichteten Substrate wurden in 5 x 20 cm grosse Streifen geschnitten. Die mit abgelüftetem Klebstoff beschichteten PVC Folie wurden auf das mit abgelüftetem Klebstoff beschichteten PIR Substrat (bei Beispiel *2*: auf das unbehandelte PIR Substrat) gelegt und im Spalt auf 70°C erwärmt und mit einer 5 kg Rolle verpresst.

Bei diesen so hergestellten Probekörpern wurde nach 5 Minuten bzw. nach 3 Tagen Lagerung bei Raumtemperatur (d.h. die Probekörper wurden abgekühlt) die Haftung über dem Schälwert wie folgt gemessen:

Sofort nach dem Fügen wurde der Schälwiderstand des Verbundes mit einer Zugprüfmaschine geprüft (Winkel 90°, Vorschubgeschwindigkeit 100 mm/min). Falls das PIR bei dieser Messung beim Test versagte, wurde in Tabelle 1 "MB" (=Materialbruch im PIR) angegeben.

Des Weiteren wurde die Weichmacheraufnahme wie folgt bestimmt: Aus den Klebstoffen wurden Filme gegossen mit einer Nassschichtdicke von 0.8 mm. Nach dem kompletten Trocknen der Filme wurden diese gewogen ($m_0$) und in 50°C warmes Di-isononylphthalat, einem in PVC üblich verwendeten Weichmacher, eingetaucht. Nach 20 Stunden Lagerung in Di-isononylphthalat (50°C) wurden die Filme entnommen, abgewischt und erneut gewogen ($m_L$). Die Weichmacheraufnahme in % wurde wie folgt berechnet:

$$\text{Weichmacheraufnahme} = (m_L - m_0)/\ m_0$$

Eine Weichmacheraufnahme von mehr als 15 %, insbesondere von mehr als 25%, gilt als nicht akzeptabler Wert, denn dadurch ist die Langzeitbeständigkeit des Verbundes gefährdet.

Die Ergebnisse von Tabelle 1 zeigen, dass die erfindungsgemässen Klebstoffe eine äusserst gute Anfangs- und Langzeithaftung aufweisen und zudem sich über eine ausserordentlich geringe Weichmacheraufnahme ausweisen. Es zeigte sich zudem, dass vor allem Mischungen von EVA-Dispersion und Polyurethandispersion basierend auf Polyesterpolyol äusserst geringe Weichmacheraufnahmen aufweisen.

**Bezugszeichenliste**

1   flexible Polyvinylchlorid-Abdichtungsfolie bzw. -Abdichtungsbahn

2   nichtreaktive Dispersionsklebstoffzusammensetzung

3   abgelüftete Dispersionsklebstoffzusammensetzung

4   mit abgelüfteter Dispersionsklebstoffzusammensetzung beschichtete Polyvinylchlorid-Abdichtungsfolie, bzw.-Abdichtungsbahn

5   Oberfläche

5'   mit abgelüfteter Dispersionsklebstoffzusammensetzung 3 beschichtete Oberfläche

6   Bauwerk des Tiefbaus oder Hochbaus

7    Spalt

8    Wärmequelle

9    Schichtverbundkörper

10   Rolle

**Patentansprüche**

1. Verfahren zum Abdichten eines Bauwerkes des Tiefbaus oder Hochbaus (5) umfassend die Schritte

   a) Auftragen einer nichtreaktiven Dispersionsklebstoffzusammensetzung (2) auf eine flexible Polyvinylchlorid-Abdichtungsfolie (1);
   b) Ablüften der nichtreaktiven Dispersionsklebstoffzusammensetzung (2) unter Bildung einer mit abgelüfteter Dispersionsklebstoffzusammensetzung (3) beschichteten Polyvinylchlorid-Abdichtungsfolie (4), welche bei Raumtemperatur klebfrei ist;
   c) Auflegen der mit abgelüfteter Dispersionsklebstoffzusammensetzung (3) beschichteten Polyvinylchlorid-Abdichtungsfolie (4), auf die Oberfläche (5) eines Bauwerkes (6) des Tiefbaus oder Hochbaus, so dass die abgelüftete Dispersionsklebstoffzusammensetzung (3) zwischen Polyvinylchlorid-Abdichtungsfolie (1) und Oberfläche (5) angeordnet wird;
   d) Zuführen von Wärme unter Aufschmelzen oder Anschmelzen der abgelüfteten Dispersionsklebstoffzusammensetzung (3)
   e) Abkühlen der abgelüfteten Dispersionsklebstoffzusammensetzung (3) unter Bildung eines Klebverbundes zwischen flexibler Polyvinylchlorid-Abdichtungsfolie (1) und der Oberfläche des Bauwerkes (6).

2. Verfahren gemäss Anspruch 1, **dadurch gekennzeichnet, dass** die nichtreaktive Dispersionsklebstoffzusammensetzung eine Polyurethandispersion, insbesondere auf einem Polyesterpolyol basierende Polyurethandispersion, ist oder enthält.

3. Verfahren gemäss Anspruch 1 oder 2, **dadurch gekennzeichnet, dass** die nichtreaktive Dispersionsklebstoffzusammensetzung ein Copolymer ist, welches aus der radikalischen Polymerisation von mindestens zwei Monomeren mit mindestens einer, vorzugsweise einer, ungesättigten C=C-Doppelbindung erhalten wird, bevorzugt ein Ethylen/Vinylacetat-Copolymer, enthält.

4. Verfahren gemäss einem der vorhergehenden Ansprüche, **dadurch gekennzeichnet, dass** die nichtreaktive Dispersionsklebstoffzusammensetzung eine Polyurethandispersion, insbesondere auf einem Polyesterpolyol basierende Polyurethandispersion, sowie mindestens ein Copolymer, erhalten aus der radikalischen Polymerisation von mindestens zwei Monomeren mit mindestens einer, bevorzugt einer, ungesättigten C=C-Doppelbindung, bevorzugt ein Ethylen/Vinylacetat-Copolymer, enthält, wobei das Gewichtverhältnis zwischen Polyurethandispersion und Copolymer aus mindestens zwei Monomeren mit einer ungesättigten C=C-Doppelbindung einen Wert von 100 : 30 - 30 : 70, insbesondere von 50 : 50, beträgt.

5. Verfahren gemäss einem der vorhergehenden Ansprüche, **dadurch gekennzeichnet, dass** die nichtreaktiven Dispersionsklebstoffzusammensetzung eine Flüssigphase und eine Festkörperphase aufweist.

6. Verfahren gemäss Anspruch 5, **dadurch gekennzeichnet, dass** der Festkörper der nichtreaktiven Dispersionsklebstoffzusammensetzung eine Schmelztemperatur von 60 - 120 °C, insbesondere von 70 - 90 °C, aufweist.

7. Verfahren gemäss einem der vorhergehenden Ansprüche, **dadurch gekennzeichnet, dass** die nichtreaktive Dispersionsklebstoffzusammensetzung eine wässrige Dispersion ist.

8. Verfahren gemäss Anspruch 7, **dadurch gekennzeichnet, dass** der Wasseranteil am Gewicht der gesamten nichtreaktive Dispersionsklebstoffzusammensetzung zwischen 30 und 70 Gew.-%, insbesondere zwischen 40 und 60 Gew.-%, beträgt.

9. Verfahren gemäss einem der vorhergehenden Ansprüche, **dadurch gekennzeichnet, dass** die Schichtdicke der nach Schritt b) abgelüfteten Dispersionsklebstoffzusammensetzung (3) zwischen 50 und 500 Mikrometer, insbesondere zwischen 100 und 250 Mikrometer, beträgt.

**10.** Verfahren gemäss einem der vorhergehenden Ansprüche, **dadurch gekennzeichnet, dass** die Oberfläche (5) eines Bauwerkes (6) des Tiefbaus oder Hochbaus eine mit abgelüfteter Dispersionsklebstoffzusammensetzung (3) beschichteten Oberfläche (5') ist, wie sie über die zusätzlichen Schritte a') und b') erhalten wurden

> a') Auftragen einer nichtreaktiven Dispersionsklebstoffzusammensetzung (2) auf Oberfläche (5) eines Bauwerkes (6) des Tiefbaus oder Hochbaus;
> b') Ablüften der nichtreaktiven Dispersionsklebstoffzusammensetzung (2) unter Bildung einer mit abgelüfteter Dispersionsklebstoffzusammensetzung (3) beschichteten Oberfläche (5');

mit der Massgabe, dass die Schritte a') und b') zeitlich vor dem Schritt c) erfolgen.

**11.** Verfahren gemäss einem der vorhergehenden Ansprüche, **dadurch gekennzeichnet, dass** das Zuführen von Wärme in Schritt d) während des Auflegens der Dispersionsklebstoff-beschichteten Polyvinylchlorid-Abdichtungsfolie (4) in Schritt c), insbesondere in den während des Auflegens zwischen Dispersionsklebstoff-beschichteter Polyvinylchlorid-Abdichtungsfolie (4) und der Oberfläche (5) eines Bauwerkes (6) gebildeten Spalt (7), erfolgt.

**12.** Verfahren gemäss einem der vorhergehenden Ansprüche, **dadurch gekennzeichnet, dass** das Zuführen von Wärme in Schritt d) auf der der Dispersionsklebstoffzusammensetzung entgegen gesetzten Seite der Polyvinylchlorid-Abdichtungsfolie (4) erfolgt und über die Polyvinylchlorid-Abdichtungsfolie (4) auf die Dispersionsklebstoffzusammensetzung übertragen wird.

**13.** Verwendung einer mit einer nicht-reaktiven abgelüfteten Dispersionsklebstoff-beschichteten Polyvinylchlorid-Abdichtungsfolie (3), welche bei Raumtemperatur klebfrei ist; zum Abdichten eines Bauwerkes des Tiefbaus oder Hochbaus.

**14.** Schichtverbundkörper (9), welcher eine

> i) Schicht einer Polyvinylchlorid-Abdichtungsfolie (1)
> ii) Schicht einer abgelüfteten Dispersionsklebstoffzusammensetzung (3)
> iii) ein Bauwerk des Tiefbaus oder Hochbaus (6)

aufweist, wobei die Schicht der abgelüfteten Dispersionsklebstoffzusammensetzung (3) zwischen der Schicht der Polyvinyl-Abdichtungsfolie (1) und des Bauwerks des Tiefbaus oder Hochbaus (6) angeordnet ist.

**15.** Schichtverbundkörper (9) gemäss Anspruch 14, **dadurch gekennzeichnet, dass**, das Bauwerk (6) des Tiefbaus oder Hochbaus ein Dach ist.

Figur 1

Figur 2

Figur 3

Figur 4

Figur 5

Figur 6

Europäisches
Patentamt

European
Patent Office

Office européen
des brevets

**EUROPÄISCHER RECHERCHENBERICHT**

Nummer der Anmeldung

EP 10 19 5805

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2005/246991 A1 (CHEN ET AL.) 10. November 2005 (2005-11-10) | 13-15 | INV. E04D5/14 E04B1/66 |
| A | * Absatz 4 - Seite 1, Spalte 2, Zeile 9 * ----- | 1-12 | B32B27/08 |
| E | EP 2 316 865 A (SIKA TECHNOLOGY) 4. Mai 2011 (2011-05-04) * Absatz [0079] - Absatz [0083]; Abbildungen 1-5 * ----- | 14,15 | B32B27/30 C08G18/08 C09J175/04 C09J175/06 |

| RECHERCHIERTE SACHGEBIETE (IPC) |
|---|
| E04D E04B B32B C09J C08G |

Der vorliegende Recherchenbericht wurde für alle Patentansprüche erstellt

| Recherchenort | Abschlußdatum der Recherche | Prüfer |
|---|---|---|
| Den Haag | 15. Juni 2011 | Righetti, Roberto |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 10 19 5805

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-06-2011

| Im Recherchenbericht angeführtes Patentdokument | Datum der Veröffentlichung | Mitglied(er) der Patentfamilie | Datum der Veröffentlichung |
|---|---|---|---|
| US 2005246991 A1 | 10-11-2005 | KEINE | |
| EP 2316865 A | 04-05-2011 | WO 2011051100 A2 | 05-05-2011 |

Für nähere Einzelheiten zu diesem Anhang : siehe Amtsblatt des Europäischen Patentamts, Nr.12/82

EPO FORM P0461